# EUROPÄISCHE PATENTSCHRIFT

(11) **EP 1 086 344 B1**
(45) Veröffentlichungstag und Bekanntmachung des Hinweises auf die Patenterteilung: **11.12.2002**
(21) Anmeldenummer: 99929169.3
(22) Anmeldetag: 10.06.1999
(51) Int. Cl.: F25D 23/06, B29C 44/58, F16K 15/03

(54) **WÄRMEISOLATIONSGEHÄUSE, INSBESONDERE FÜR HAUSGERÄTE**
HEAT-INSULATING ENCLOSURE, ESPECIALLY FOR HOUSEFHOLD APLIANCES
CORPS THERMO-ISOLANT, EN PARTICULIER POUR APPAREILS MENAGERS

(30) Priorität: 10.06.1998 DE 19825980
(43) Veröffentlichungstag der Anmeldung: 28.03.2001
(73) Patentinhaber: BSH Bosch und Siemens Hausgeräte GmbH, 81669 München (DE)
(72) Erfinder: STUMM, Friedhelm, D-89542 Herbrechtingen (DE); HÄGELE, Fritz, D-89542 Herbrechtingen (DE)
(74) Vertreter: Dosterschill, Peter, Dr.
(86) Internationale Anmeldenummer: EP9904002
(87) Internationale Veröffentlichungsnummer: WO99064800

(56) Entgegenhaltungen:
- EP-A- 0 194 585
- DE-A- 19 728 648
- DE-B- 1 282 390
- US-A- 3 347 265
- US-A- 3 739 936
- US-A- 5 670 179
- PATENT ABSTRACTS OF JAPAN vol. 008, no. 253 (M-339), 20. November 1984 (1984-11-20) & JP 59 127737 A (AKIRESU KK), 23. Juli 1984 (1984-07-23)

## Beschreibung

Die Erfindung betrifft ein Wärmeisolationsgehäuse, insbesondere für ein Hausgerät, mit einem Zwischenraum zwischen einer Innenwand und einer Außenwand und mit einem Absperrventil in einem Wandteil von einer der beiden Wände zum Ausschäumen des Zwischenraumes mit einem Wärmeisoliermaterial, wobei das Ventil eine Ventilöffnung in dem Wandteil und einen an diesem Wandteil befestigten, auf der den Zwischenraum zugewandten Wandteilseite angeordneten Ventilkörper aufweist.

Ein derartiges Wärmeisolationsgehäuse ist aus der DE 1 282 390 A bekannt.

Die Erfindung betrifft insbesondere Gefrierschränke und Kühlschränke, Kälte- und Klimageräte mit einem doppelwandigen oder mehrwandigen Gehäuse oder Gehäuseteil, dessen Zwischenraum zwischen einer Innenwand und einer Außenwand mit Wärmeisolationsmaterial ausgeschäumt ist. Weitere Verwendungsmöglichkeiten der Erfindung sind Warmwasserboiler sowie stationäre und mobile Tanks jeder Art.

Bei Kühlschränken und Gefrierschränken ist es bekannt, den Hohlraum zwischen einer Außenwand und einer Innenwand mit Kunststoffschaum auszuschäumen. In der Außenwand, normalerweise in einer Bodenwanne, befindet sich eine kreisrunde Öffnung und dahinter eine Ventilklappe, welche aus Kunststoff besteht und mit der Außenwand bzw. der Bodenwanne starr verbunden ist. Dadurch kann die Ventilklappe nur durch Verbiegen ihres Verbindungssteges geöffnet werden, mit welchem sie mit der Außenwand verbunden ist. Durch das "Erinnerungsvermögen" oder Federeigenschaft der Klappe kehrt sie nach Wegnahme der sie öffnenden Kraft automatisch in ihre Schließstellung zurück, jedoch nur sehr langsam. Zum Ausschäumen des Zwischenraumes wird ein Rohr durch die Ventilöffnung hindurch geführt, wobei das Rohr die Ventilklappe öffnet und in Offenstellung hält. Das während des Ausschäumvorganges flüssige Ausschäummaterial wird mit solchem Druck in den Zwischenraum eingespritzt, daß er diesen möglichst vollständig ausfüllt. Am Ende dieses Füllvorganges wird das Rohr aus der Ventilöffnung herausgezogen. Durch die langsame Schließbewegung der Ventilklappe kann nicht mit Sicherheit vermieden werden, daß ein Teil des flüssigen Ausschäummaterials aus der Ventilöffnung herausfließt, nachdem das Ausschäummaterial-Zufuhrrohr aus der Ventilöffnung herausgenommen wurde. Das Ausschäummaterial wird nach einiger Zeit fest oder hart. Ein rohrartiger Stutzen auf der Innenseite der Ventilöffnung wirkt zwar einem solchen Herausfließen des Ausschäummaterials aus der Ventilöffnung entgegen, kann jedoch das Ausfließen nicht vollständig vermeiden.

Durch die Erfindung soll die Aufgabe gelöst werden, eine preiswerte, einfache Konstruktion zu schaffen, welche ein Herausfließen eines Teiles des flüssigen Ausschäummaterials aus der Ventilöffnung, solange es noch nicht erhärtet ist, besser verhindert.

Diese Aufgabe wird gemäß der Erfindung durch die kennzeichnenden Merkmale von Anspruch 1 gelöst.

Weitere Merkmale der Erfindung sind in den Unteransprüchen enthalten.

Die Erfindung wird im folgenden mit Bezug auf die Zeichnungen anhand einer bevorzugten Ausführungsform als Beispiel beschrieben.

In den Zeichnungen zeigen
- Fig. 1: einen Querschnitt durch einen Eckteil eines doppelwandigen Wärmeisolationsgehäuses in einer zum Ausschäumen des Wandzwischenraumes bestimmten Lage, wobei ein Zufuhrrohr zur Zufuhr von Wärmeisolationsmaterial in eine Ventilöffnung eingesetzt ist und einen Ventilkörper in Offenstellung hält,
- Fig. 2: den Eckteil von Fig. 1 nach dem Füllen des Wandzwischenraumes mit Wärmeisolationsmaterial in Form von aushärtbarem Kunststoffschaum,
- Fig. 3: eine vergrößerte Innenansicht eines Wandteils, in welchem die Ventilöffnung und ein Gelenkteil einstückig geformt sind, in Richtung eines Pfeiles III von Fig. 1 gesehen,
- Fig. 4: eine Draufsicht auf einen Ventilkörper im gleichen Maßstab wie Fig. 3 in Richtung des Pfeiles III von Fig. 1 vom Wandzwischenraum her gesehen,
- Fig. 5: ein Kühlgerät in Form eines Gefrierschrankes oder Kühlschrankes im Vertikalschnitt ohne Tür und
- Fig. 6: ein der Fig. 1 entsprechendes Geräteeck eines Gefrierschrankes nach dem Stand der Technik.

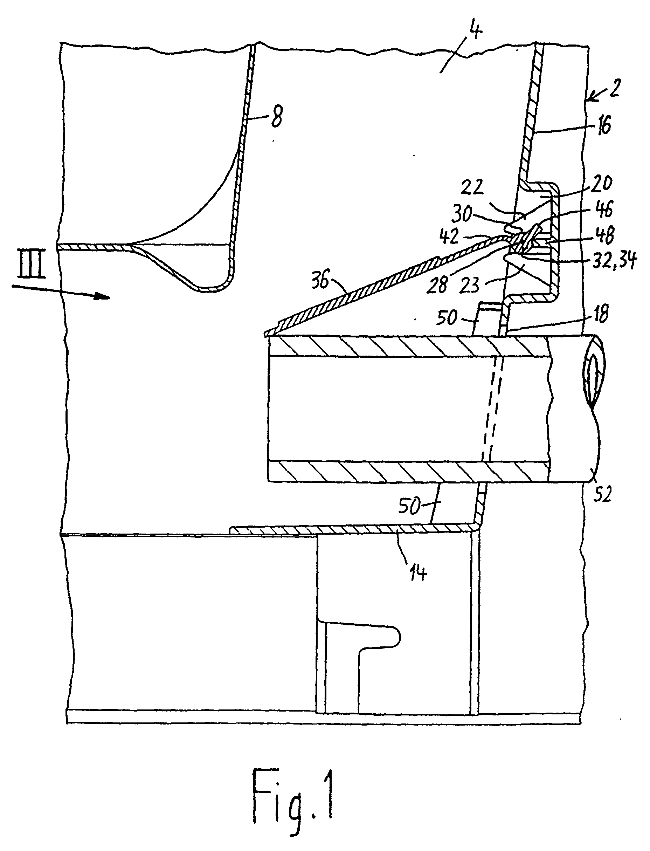

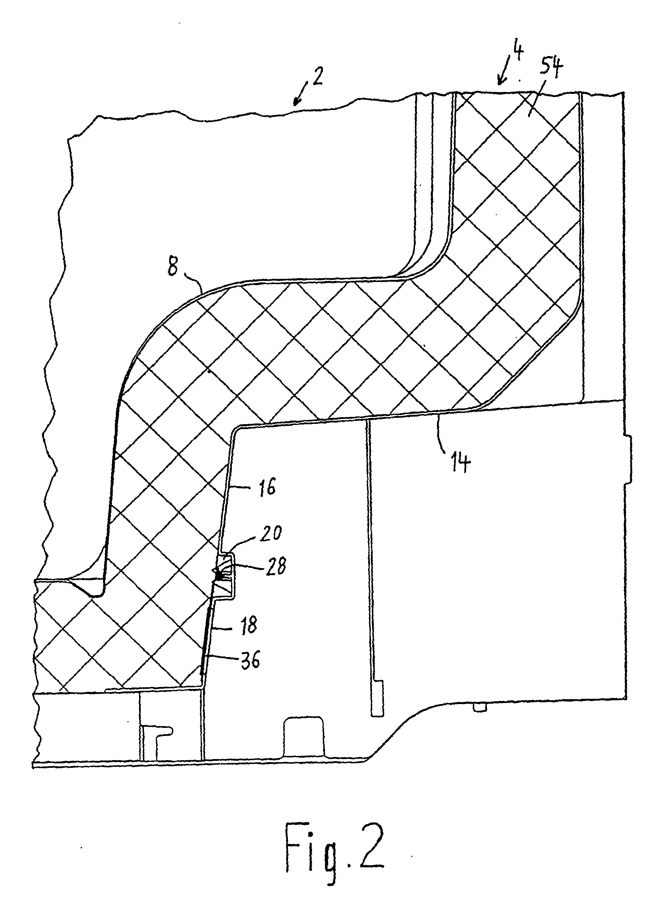

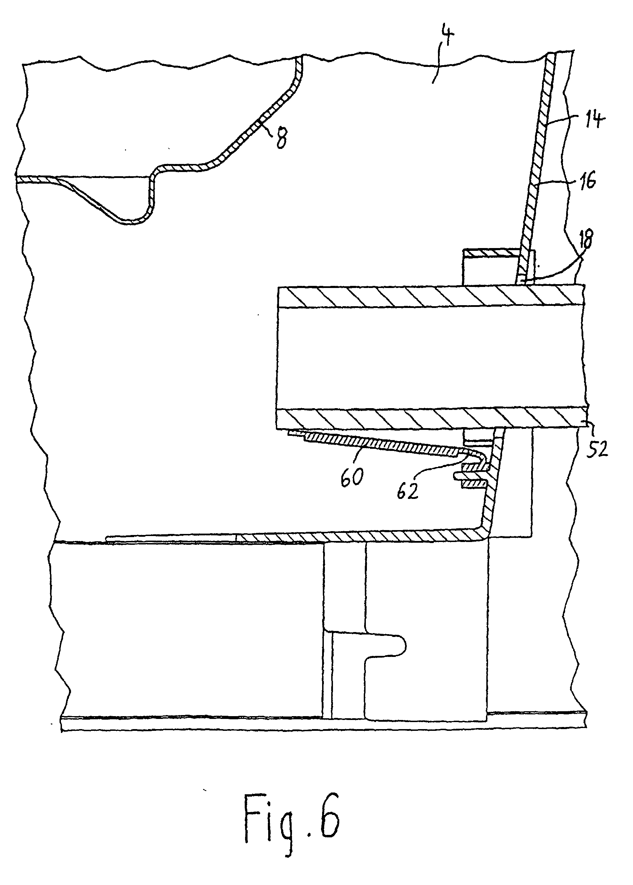

Die Erfindung wird im folgenden mit Bezug auf die Figuren 1-5 in Anwendung auf ein Gehäuse 2 eines Gefrierschrankes oder Kühlschrankes beschrieben, welcher in Fig. 5 im Vertikalschnitt ohne Tür dargestellt ist. Zum Ausschäumen eines Zwischenraumes 4, der zwischen einer Außenwand 6 und einer Innenwand 8 des doppelwandigen Gehäuses 2 gebildet ist, wird das Gehäuse 2 von der in Fig. 5 gezeigten Gebrauchsstellung gemäß einem Pfeil I im Gegenuhrzeigersinn um 90 Grad in die in den Figuren 1 und 2 gezeigte Füllstellung gedreht.

Die Innenwand 8 bildet einen Kühlgutbehälter und ist einstückig aus einer Kunststoffplatte geformt. Die Außenwand 6 besteht aus einer Rückwand 10 aus Kunststoff oder Karton bzw. Pappe, einer Deckenwand 12 aus Kunststoff oder Karton bzw. Pappe und einer Bodenwanne 14 aus Karton bzw. Pappe oder vorzugsweise aus Kunststoff.

Ein Wandteil 16 der Bodenwanne 14 hat in der Gebrauchslage von Fig. 5 eine leicht nach rechts unten abfallende Schräglage und in der Füllstellung von Fig. 1 eine leicht nach rechts außen geneigte Schräglage. In dem Wandteil 16 ist eine kreisrunde Ventilöffnung 18 gebildet. Mit Bezug auf die in Fig. 1 gezeigte Füllstellung sind oberhalb der Ventilöffnung 18 auf der zum Zwischenraum 4 zeigenden Innenseite des Wandteils 16 eine Wandvertiefung 20 und darin, zum Zwischenraum 4 zeigend, Lagerböcke 22, 23, 24 und 25 einstückig angeformt, so daß sie zusammen mit dem Wandteil 16 aus einem einzigen Materialstück bestehen. Die Lagerböcke ragen nicht oder nur wenig aus der Wandvertiefung 20 in Richtung zum Zwischenraum 4 heraus. Sie definieren eine Gelenkdrehachse 28, welche sowohl in der Gebrauchsstellung von Fig. 5 als auch in der Füllstellung von Fig. 1 sich horizontal und parallel zur Ebene der Ventilöffnung 18 erstreckt. Je zwei entgegengesetzt zur Drehachse 28 angeordnete Lagerböcke 22/23 bzw. 24/25 bilden an ihren einander gegenüberliegenden Innenflächen eine Drehlageröffnung 30, in welche Lagerzapfen 32 und 34 einer Ventilklappe 36 radial einrastbar sind und dann darin leicht drehbar sind, so daß die Ventilklappe 36 durch ihr Eigengewicht sich um die Drehachse 28 drehen und die Ventilöffnung 18 verschließen kann. Der Wandteil 16 hat sowohl in der Füllstellung von Fig. 1 als auch in der Gebrauchstellung von Fig. 5 eine solche Schräglage oder Horizontallage, daß die Ventilklappe 36 durch ihr Eigengewicht auf den Öffnungs-Randbereich 40 der Ventilöffnung 18 in Schließrichtung drückt. Die beiden Lagerbockpaare 22/23 und 24/25 sind dem Abstand der Lagerzapfen 32 und 34 entsprechend in Längsrichtung der Drehachse 28 mit Abstand voneinander angeordnet. Die beiden Lagerzapfen 32 und 34 bilden zusammen eine Gelenkachse und sind über einen fingerartigen Vorsprung 42 mit der Ventilklappe 36 verbunden, mit welcher sie zusammen aus einem einzigen Materialstück geformt sind. Der fingerartige Vorsprung 42 kann mit ungefähr radial zur Drehachse 28 verlaufenden Verstärkungsrippen 44 versehen sein.

Der fingerartige Vorsprung 42 hat eine an seinem freien Ende ungefähr radial zur Drehachse 28 wegragende Anschlagnase 46. Die Anschlagnase 46 besteht aus einem Stück mit der Ventilklappe 36 und begrenzt in Zusammenwirkung mit einer Anschlagrippe 48 den Öffnungswinkel der Ventilklappe 36. Dadurch wird vermieden, daß die Ventilklappe 36 vor dem Ausschäumen des Zwischenraumes 4 in eine Position drehen kann, aus welcher er in der Füllstellung von Fig. 1 nicht mehr auf die Ventilöffnung 18 zurückfallen könnte. Damit wird auch vermieden, daß die Ventilklappe 36 an die Innenwand 8 anstoßen und mit ihr verklemmen kann. Die Anschlagrippe 48 ist parallel zur Drehachse 28 auf dem Grund der Wandvertiefung 20 einstückig mit ihr gebildet und ragt von ihr in Richtung zum Zwischenraum 4.

In der Füllstellung von Fig. 1 befindet sich die Drehachse 28 oberhalb und nach rechts außen seitlich versetzt von der Ebene der Ventilöffnung 18. Der kreisscheibenförmige Ventilkörper 36 befindet sich nach links außen seitlich versetzt von der Ebene der Ventilöffnung 18. Der fingerartige Vorsprung 42 erstreckt sich von dem Ventilkörper 36 bogenförmig oder winkelartig in die Wandvertiefung 20. Dadurch kann die Ventilklappe 36 durch ihr Eigengewicht auf die Ventilöffnung 18 fallen und auch in Schließstellung eine Schließkraft auf den Öffnungsrand 40 ausüben.

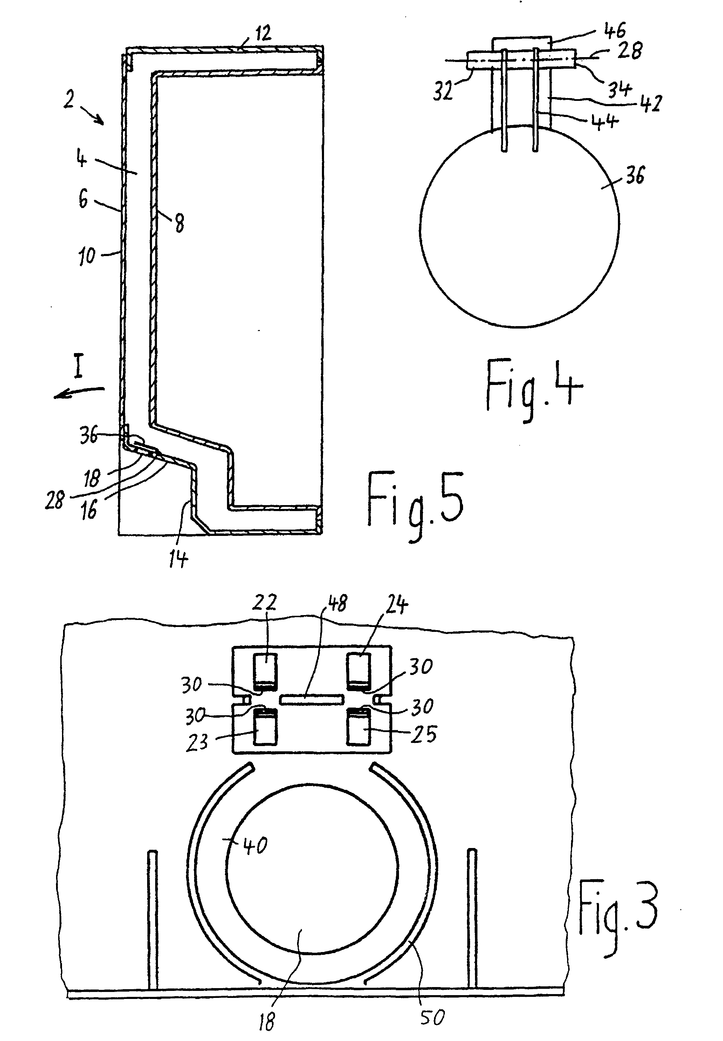

Die Figuren 3 und 4 sind in gleichem Maßstab gezeichnet. Die Ventilöffnung 18 ist mit radialem Abstand von einem rohrstutzenartigen Vorsprung 50 umgeben, welcher ein einstückiges Teil des Wandteils 16 ist und die Ventilklappe 36 in Schließstellung mit radialem Abstand umgibt. Der rohrstutzenartige Vorsprung 50 ragt in den Zwischenraum 4 und hält während des Ausschäumens des Zwischenraumes 4 flüssiges Wärmeisolationsmaterial davon ab, aus der Ventilöffnung 18 herauszufließen, insbesondere dann, wenn ein Zufuhrrohr 52 nach dem Ausschäumen aus der Ventilöffnung 18 herausgezogen wird.

Zum Ausschäumen des Zwischenraumes 4 mit flüssigem Wärmeisolationsmaterial wird ein Zufuhrrohr 52 von außen durch die Ventilöffnung 18 gesteckt. Dabei bewegt das Zufuhrrohr 52 die Ventilklappe 36 in die in Fig. 1 gezeigte Öffnungsstellung. Danach wird das flüssige Wärmeisolationsmaterial mit hohem Druck in den Zwischenraum 4 gespritzt. Nach dem Beendigen des Füllvorganges wird das Zufuhrrohr 52 aus der Ventilöffnung 18 herausgezogen. Dabei fällt die Ventilklappe 36 durch ihr Eigengewicht nach unten auf dem Randbereich 40 der Ventilöffnung 18, so daß diese geschlossen wird. Anschließend kühlt das flüssige Wärmeisolatiansmaterial ab und wird fest. Fig. 2 zeigt den mit Wärmeisolationsmaterial 54 gefüllten Zwischenraum 4 und das geschlossene Ventil 18, 36.

Bei dem in Fig. 6 in Füllstellung gezeigten Stand der Technik eines Gefrierschrankes oder Kühlschrankes ist eine aus Kunststoff bestehende Ventilklappe 60 ohne Gelenk an dem Wandteil 16 befestigt. Dadurch kann sie von einem Zufuhrrohr 52 nur durch Abknicken in einem Knickbereich 62 von der Ventilöffnung 18 weg in Offenstellung bewegt werden. Wenn das Zufuhrrohr 52 nach dem Ausschäumen des Zwischenraumes 4 aus der Ventilöffnung 18 herausgezogen wird, bewegt sich die Ventilklappe 60 aufgrund ihrer Eigen-Flexibilität wieder zurück in Richtung zur Ventilöffnung 18. Diese Schließbewegung der Ventilklappe 60 erfolgt jedoch nur sehr langsam, und häufig erreicht die Ventilklappe 60 nicht den Rand der Ventilöffnung 18. Dadurch kann häufig nicht vermieden werden, daß bei und nach dem Herausziehen des Zufuhrrohres 52 ein Teil des noch flüssigen Wärmeisolationsmaterials aus der Ventilöffnung 18 herausfließt, bevor es aushärtet.

## Patentansprüche

1. Wärmeisolationsgehäuse (2), insbesondere Hausgerät, mit einem Zwischenraum (4) zwischen einer Innenwand (8) und einer Außenwand (6) und mit einem Absperrventil (18, 36) in einem Wandteil (16) von einer der beiden Wände (8, 6) zum Ausschäumen des Zwischenraumes (4) mit einem Wärmeisoliermaterial, wobei das Ventil (18, 36) eine Ventilöffnung (18) in dem Wandteil (16) und einen an diesem Wandteil (16) befestigten, auf der den Zwischenraum (4) zugewandten Wandteilseite angeordneten Ventilkörper (36) aufweist, **dadurch gekennzeichnet ,daß** der Ventilkörper (36) mit dem Wandteil (16) durch ein Drehgelenk (32, 34, 22, 23, 24, 25) verbunden ist, welches aus einem Gelenkteil (32, 34) des Ventilkörpers und aus einem Gelenkteil (22, 23, 24, 25) des Wandteils (16) besteht, die ineinander eingesetzt sind und um eine Drehachse (28) relativ zueinander durch das Gewicht des Ventilkörpers (36) selbständig drehbar sind, daß die Drehachse (28) relativ zum Schwerpunkt des Ventilkörpers (36) und relativ zur Ventilöffnung (18) derart versetzt angeordnet ist, daß mindestens dann, wenn sich das Wärmeisolationsgehäuse (2) in einer zum Ausschäumen bestimmten Lage befindet, der Ventilkörper (36) durch sein Eigengewicht um die Drehachse (28) herum in seine Schließstellung fallen kann.

2. Wärmeisolationsgehäuse nach Anspruch 1, **dadurch gekennzeichnet, daß** der Ventilkörper (36) und sein Gelenkteil (32, 34) zusammen aus einem einstückigen Materialstück bestehen.

3. Wärmeisolationsgehäuse nach Anspruch 1 oder 2, **dadurch gekennzeichnet, daß** der Wandteil (16) und sein Gelenkteil (22, 23, 24, 25) zusammen aus einem einstückigen Materialstück bestehen.

4. Wärmeisolationsgehäuse nach einem der vorhergehenden Ansprüche, **dadurch gekennzeichnet, daß** die beiden Gelenkteile (32, 34, 22, 23, 24, 25) ineinander einschnappbar ausgebildet sind.

5. Wärmeisolationsgehäuse nach einem der vorhergehenden Ansprüche, **dadurch gekennzeichnet, daß** der Gelenkteil des Ventilkörpers (36) eine Lagerachse (32, 34) bildet und daß der Gelenkteil (22, 23, 24, 25) des Wandteils (16) Lageröffnungen (30) zur Aufnahme der Lagerachse bildet.

6. Wärmeisolationsgehäuse nach Anspruch 5, **dadurch gekennzeichnet, daß** die Lagerachse die Form von zwei entgegengesetzt voneinander wegragenden Lagerzapfen (32, 34) hat und daß der Wandteil (16) mit Lageröffnungen (30) zur Aufnahme der Lagerzapfen versehen ist, wobei diese Lageröffnungen durch Innenwandabschnitte dieses Wandteils gebildet sind, ohne den Wandteil (16) zu durchdringen.

7. Wärmeisolationsgehäuse nach einem der vorhergehenden Ansprüche, **dadurch gekennzeichnet, daß** die Gelenkteile (32, 34, 22, 23, 24, 25) des Ventilkörpers (36) und des Wandteils (16) in einer Vertiefung untergebracht sind, welche in dem Wandteil (16) auf seiner dem Zwischenraum (4) zugewandten Innenseite gebildet ist.

8. Wärmeisotationsgehäuse nach einem der vorhergehenden Ansprüche, **gekennzeichnet durch** miteinander zusammenwirkende Anschlagflächen (46, 48) des Wandteils (16) andererseits und des Ventilkörpers (36) andererseits, welche den Öffnungswinkel des Ventilkörpers (36) um die Drehachse (28) von seiner Schließstellung in seine Offenstellung begrenzen.

9. Wärmeisolationsgehäuse nach Anspruch 8, **dadurch gekennzeichnet, daß** der Öffnungswinkel auf weniger als 90° begrenzt ist.

10. Wärmeisolationsgehäuse nach Anspruch 8 oder 9, **dadurch gekennzeichnet, daß** eine der Anschlagflächen durch eine Anschlagnase (46) gebildet ist, welche mit Bezug auf die Drehachse (28) zur anderen Seite von der Drehachse wegragt als der Ventilkörper (36), mit welchem er zusammen in einem einstückigen Materialkörper gebildet ist, und daß die andere Anschlagfläche durch eine mit dem Wandteil (16) einstückige Rippe (48) gebildet ist.

11. Wärmeisofationsgehäuse nach einem der vorhergehenden Ansprüche, **dadurch gekennzeichnet, daß** der Ventilkörper (36) eine Ventilklappe ist.

12. Wärmeisolationsgehäuse nach einem der vorhergehenden Ansprüche, **dadurch gekennzeichnet, daß** die Ventilöffnung (18) von einem in den Zwischenraum ragenden rohrstutzenartigen Vorsprung (50) umgeben ist, welcher mit dem Wandteil aus einem einzigen Materialstück besteht und den Bewegungsweg des Ventilkörpers (36) nahe der Ventilöffnung (18) umgibt.

13. Wärmeisolationsgehäuse nach einem der vorhergehenden Ansprüche, **dadurch gekennzeichnet, daß** der Ventilkörper (36) und sein Gelenkteil (32, 34) aus Kunststoff bestehen.

14. Wärmeisolationsgehäuse nach einem der vorhergehenden Ansprüche, **dadurch gekennzeichnet, daß** der Wandteil (4) und sein Gelenkteil (22, 23, 24, 25) aus Kunststoff bestehen.

## Claims

1. Thermal insulation housing (2), especially domestic appliance, with an intermediate space (4) between an inner wall (8) and an outer wall (6) and with a blocking valve (18, 36) in a wall part (16) of one of the two walls (8, 6) for the foam-filling of the intermediate space (4) with a thermal insulating material, wherein the valve (18, 36) has a valve opening (18) in the wall part (16) and a valve body (36) fastened to this wall part (16) and arranged on the wall part side facing the intermediate space (4), **characterised in that** the valve body (36) is connected with the wall part (16) by a rotary joint (32, 34, 22, 23, 24, 25), which consists of a joint part (32, 34) of the valve body and a joint part (22, 23, 24, 25) of the wall part (16), which are inserted into one another and are automatically rotatable relative to one another about an axis (28) of rotation by the weight of the valve body (36), and that the axis (28) of rotation is arranged to be offset relative to the centre of gravity of the valve body (36) and relative to the valve opening (18) in such a manner that at least when the thermal insulation housing (2) is disposed in a position intended for foam-filling the valve body (36) can fall by its own weight around the axis (28) of rotation into its closed setting.

2. Thermal insulation housing according to claim 1, **characterised in that** the valve body (36) and its joint part (32, 34) together consist of an integral piece of material.

3. Thermal insulation housing according to claim 1 or 2, **characterised in that** the wall part (16) and its joint part (22, 23, 24, 25) together consist of an integral piece of material.

4. Thermal insulation housing according to one of the preceding claims, **characterised in that** the two joint parts (32, 34, 22, 23, 24, 25) are formed to be able to be snapped into one another.

5. Thermal insulation housing according to one of the preceding claims, **characterised in that** the joint part of the valve body (36) forms a mounting axle (32, 34) and that the joint part (22, 23, 24, 25) of the wall part (16) forms mounting openings (30) for reception of the mounting axle.

6. Thermal insulation housing according to claim 5, **characterised in that** the mounting axle has the form of two opposite bearing pins (32, 34) projecting away from one another and that the wall part (16) is provided with mounting openings (30) for reception of the bearing pins, wherein these mounting openings are formed by internal wall portions of this wall part without penetration of the wall part (16).

7. Thermal insulating housing according to one of the preceding claims, **characterised in that** the joint parts (32, 34, 22, 23, 24, 25) of the valve body (36) and the wall part (16) are accommodated in a recess which is formed in the wall part (16) on its inner side facing the intermediate space (4).

8. Thermal insulation housing according to one of the preceding claims, **characterised by** mutually co-operating abutment surfaces (46, 48) of the wall part (16) on the one hand and of the valve body (36) on the other hand, which bound the opening angle of the valve body (36) about the axis (28) of rotation from its closed setting to its open setting.

9. Thermal insulation housing according to claim 8, **characterised in that** the opening angle is limited to less than 90°.

10. Thermal insulation housing according to claim 8 or 9, **characterised in that** one of the abutment surfaces is formed by an abutment nose (46) which with respect to the axis (28) of rotation projects away towards the other side of the axis of rotation than the valve body (36), together with which it is formed as an integral material body, and that the other abutment surface is formed by a rib (48) integral with the wall part (16).

11. Thermal insulation housing according to one of the preceding claims, **characterised in that** the valve body (36) is a valve flap.

12. Thermal insulation housing according to one of the preceding claims, **characterised in that** the valve opening (18) is surrounded by a stub-pipe-like projection (50) which projects into the intermediate space and which together with the wall part consists of a single piece of material and surrounds the movement path of the valve body (36) near the valve opening (18).

13. Thermal insulation housing according to one of the preceding claims, **characterised in that** the valve body (36) and its joint part (32, 34) consist of synthetic material.

14. Thermal insulation housing according to one of the preceding claims, **characterised in that** the wall part (4) and its joint part (22, 23, 24, 25) consist of synthetic material.

## Revendications

1. Corps thermo-isolant (2), en particulier pour un appareil ménager, présentant un espace (4) compris entre une paroi intérieure (8) et une paroi extérieure (6) et comprenant une soupape d'arrêt (18, 36) placée dans une partie de paroi (16) de l'une des deux parois (8, 6) et servant à remplir ledit espace (4) d'une matière thermo-isolante, ladite soupape (18, 36) ayant un orifice de soupape (18) dans ladite partie de paroi (16) ainsi qu'un corps de soupape (36) fixé à ladite partie de paroi (16) et placé sur la face de la partie de la paroi tournée vers ledit espace (4), **caractérisé en ce que** le corps de soupape (36) est assemblé avec la partie de paroi (16) par une articulation tournante (32, 34, 22, 23, 24, 25) composée d'une pièce d'articulation (32, 24) du corps de soupape et d'une pièce d'articulation (22, 23, 24, 25) de la partie de paroi (16), lesquelles sont insérées les unes dans les autres et peuvent, du fait du poids du corps de soupape (36), tourner d'elles-mêmes et l'une par rapport à l'autre autour d'un axe d'articulation (28) et **en ce que** ledit axe d'articulation (28) est décalé par rapport au barycentre du corps de soupape (36) et par rapport à l'orifice de soupape (18) de manière que ledit corps de soupape (36), du fait de son propre poids, retombe en position de fermeture en tournant autour de l'axe d'articulation (28) au moins lorsque le corps thermo-isolant (2) se trouve dans une position prévue pour le remplissage avec une matière donnant une mousse isolante.

2. Corps thermo-isolant selon la revendication 1, **caractérisé en ce que** le corps de soupape (36) et sa pièce d'articulation (32, 34) sont réalisés en une seule pièce au départ d'une seule et unique pièce de matière.

3. Corps thermo-isolant selon la revendication 1 ou 2, **caractérisé en ce que** la partie de paroi (16) et sa pièce d'articulation (22, 23, 24, 25) sont réalisées en une seule pièce au départ d'une seule et unique pièce de matière.

4. Corps thermo-isolant selon l'une des revendications précédentes, **caractérisé en ce que** les deux pièces d'articulation (32, 34, 22, 23, 24, 25) peuvent s'enclencher l'une dans l'autre.

5. Corps thermo-isolant selon l'une des revendications précédentes, **caractérisé en ce que** la pièce d'articulation du corps de soupape (36) forme un axe de palier (32, 34) et **en ce que** la pièce d'articulation (22, 23, 24, 25) de la partie de paroi (16) forme des ouvertures de palier (30) accueillant ledit axe de palier.

6. Corps thermo-isolant selon la revendication 5, **caractérisé en ce que** l'axe de palier est réalisé sous la forme de deux tourillons (32, 34) qui s'éloignent l'un de l'autre en sens contraire et **en ce que** la partie de paroi (16) est pourvue d'ouvertures de palier (30) accueillant lesdits tourillons, lesdites ouvertures étant aménagées dans des parties de la paroi intérieure au niveau de ladite partie de paroi sans cependant percer ladite partie de paroi (16).

7. Corps thermo-isolant selon l'une des revendications précédentes, **caractérisé en ce que** les pièces d'articulation (32, 34, 22, 23, 24, 25) du corps de soupape (36) et de la partie de paroi (16) sont logées dans un renfoncement réalisé dans ladite partie de paroi (16) sur la face intérieure de cette dernière, laquelle est tournée vers l'espace (4) compris entre les parois.

8. Corps thermo-isolant selon l'une des revendications précédentes, **caractérisé en ce que** des surfaces de butée (46, 48) de la partie de paroi (16), d'une part, et du corps de soupape (36), d'autre part, coopèrent tout en limitant l'angle d'ouverture du corps de soupape (36) lorsque ledit corps de soupape passe de sa position de fermeture dans sa position d'ouverture en tournant autour de l'axe d'articulation (28).

9. Corps thermo-isolant selon la revendication 8, **caractérisé en ce que** l'angle d'ouverture est limité à une ouverture de moins de 90°.

10. Corps thermo-isolant selon la revendication 8 ou 9, **caractérisé en ce que** l'une des surfaces de butée est réalisée par un ergot de butée (46) qui, par rapport à l'axe d'articulation (28), s'éloigne de celui-ci en ressortant du côté autre que celui du corps de soupape (36) avec lequel il est réalisé en une seule pièce au départ d'une seule et même pièce de matière et **en ce que** l'autre surface de butée est formée par une nervure (48) réalisée en une seule pièce avec la partie de paroi (16).

11. Corps thermo-isolant selon l'une des revendications précédentes, **caractérisé en ce que** le corps de soupape (36) est un clapet de soupape.

12. Corps thermo-isolant selon l'une des revendications précédentes, **caractérisé en ce que** l'orifice de soupape (18) est entouré d'une saillie en forme de tubulure qui ressort dans l'espace compris entre les parois, ladite saillie étant réalisée en une seule pièce avec la partie de paroi au départ d'une seule et même pièce de matière et entourant le chemin du mouvement du corps de soupape (36) à proximité de l'orifice de soupape (18).

13. Corps thermo-isolant selon l'une des revendications précédentes, **caractérisé en ce que** le corps de soupape (36) et sa pièce d'articulation (32, 34) sont réalisés en matière plastique.

14. Corps thermo-isolant selon l'une des revendications précédentes, **caractérisé en ce que** la partie de paroi (4) et sa pièce d'articulation (22, 23, 24, 25) sont réalisées en matière plastique.
